# EUROPÄISCHE PATENTANMELDUNG

(11) **EP 2 337 269 A1**
(43) Veröffentlichungstag der Anmeldung: **22.06.2011**
(21) Anmeldenummer: 10190648.5
(22) Anmeldetag: 10.11.2010
(51) Int. Cl.: H04L 12/28

(54) **Vernetzungsanordnung einer Küchenmaschine und eines Multimediagerätes**

(30) Priorität: 17.12.2009 DE 202009014874 U
(71) Anmelder: MELITTA HAUSHALTSPRODUKTE GmbH & Co. Kommanditgesellschaft, 32427 Minden (DE)
(72) Erfinder: Fischer, Peter, 71157, Hildrizhausen (DE)
(74) Vertreter: Dantz, Jan Henning

(57) **Zusammenfassung**

Eine Vernetzungsanordnung (1) wenigstens einer Küchenmaschine (2) und wenigstens eines Multimediagerätes (3), mit einer Schnittstelleneinheit (5) zur Verbindung der wenigstens einen Küchenmaschine (2) mit dem wenigstens einen Multimediagerät (3); einer Ladestation (4) zur Aufnahme des wenigstens einen Multimediagerätes (3); und einer Übertragungsstrecke (7) zwischen der Schnittstelleneinheit (5) und dem wenigstens einen Multimediagerät (3).

## Beschreibung

Die Erfindung betrifft eine Anordnung einer Küchenmaschine und eines Multimediagerätes.

Die US 2002/0000092 A1 beschreibt eine Überwachungseinheit für einen Kühlschrank oder ein Tiefkühlgerät. Die Überwachungseinrichtung soll einen Benutzer warnen, wenn sich bestimmte Kühlbedingungen ergeben, die zu einer Beeinträchtigung der gekühlten Ware in den Geräten führen können. Es ist dabei möglich, dass eine Temperatur überwacht wird. Außerdem kann die Überwachungseinrichtung den Benutzer, einen Überwachungsdienst und/oder einen Reparaturdienst automatisch benachrichtigen. Ein nachträglicher Einbau in Kühlgeräte ist möglich.

Multimediageräte in Ausführung als Mobiltelefone, PDA (Personal Digital Assistant), MP3-Player, I-Pod, I-Phone sind ebenfalls im täglichen Leben weit verbreitet. Mobiltelefone weisen derzeit schon große Anzeigefelder in Form von Multifunktionsbildschirmen auf. Weiterhin können sie aufgrund umfassenden elektronischer Halbleiterspeicher erhebliche Datenmengen für Musikstücke und Bilder speichern.

Im Verlauf der zunehmenden Verbreitung derartiger Geräte besteht der Bedarf nach Vernetzung derselben.

Es ist daher die Aufgabe der vorliegenden Erfindung, eine verbesserte Vernetzungsanordnung zu schaffen.

Die Aufgabe wird durch eine Vernetzungsanordnung mit den Merkmalen des Anspruchs 1 gelöst.

Demgemäß umfasst eine Vernetzungsanordnung wenigstens einer Küchenmaschine und wenigstens eines Multimediagerätes eine Schnittstelleneinheit zur Verbindung der wenigstens einen Küchenmaschine mit dem wenigstens einen Multimediagerät; eine Ladestation zur Aufnahme des wenigstens einen Multimediagerätes; und eine Übertragungsstrecke zwischen der Schnittstelleneinheit und dem wenigstens einen Multimediagerät.

Eine Idee der Erfindung besteht darin, ein Multimediagerät mit einer Küchenmaschine über eine Schnittstelleneinheit zu vernetzen.

Ein weiterer Vorteil besteht darin, dass die Schnittstelleneinheit Lautsprecher zur akustischen, hochqualitativen Wiedergabe von Musik aus dem Multimediagerät aufweist.

In bevorzugter Ausführung kann die Übertragungsstrecke drahtlos ausgebildet sein. Die Funktionen dazu sind auf der Seite des Multimediagerätes bereits vorhanden, die Schnittstelleneinheit ist dazu entsprechend ausgerüstet.

Die drahtlose Übertragungsstrecke kann eine Bluetooth-, Funk- oder optische Übertragungsstrecke sein.

Alternativ kann die Übertragungsstrecke Bestandteil einer Verbindung zwischen Schnittstelleneinheit und Ladestation sein. Dann sind keine drahtlosen Übertragungsfunktionen in der Schnittstelleneinheit zu implementieren.

Die Übertragungsstrecke kann bidirektional ausgebildet sein. So ist zum Beispiel eine Visualisierung von Daten der Küchenmaschine auf einer Anzeigeeinheit des Multimediagerätes ermöglicht.

Wenn eine Eingabeeinheit des Multimediagerätes mit der Küchenmaschine in Funktionsverbindung steht, können damit weitere Funktionen für die Küchenmaschine eingestellt und genutzt werden.

Die Erfindung wird nun anhand von Ausführungsbeispielen mit Bezug auf die beigefügten Zeichnungen näher erläutert. Hierbei zeigen:
- Fig. 1: eine schematische, perspektivische Ansicht eines Ausführungsbeispiels einer erfindungsgemäßen Vernetzungsanordnung; und
- Fig.2: ein schematisches Blockschaltbild für eine Vernetzungsanordnung.

Gleiche Bauelemente bzw. Funktionseinheiten mit gleicher Funktion weisen in den Figuren gleiche Bezugszeichen auf.

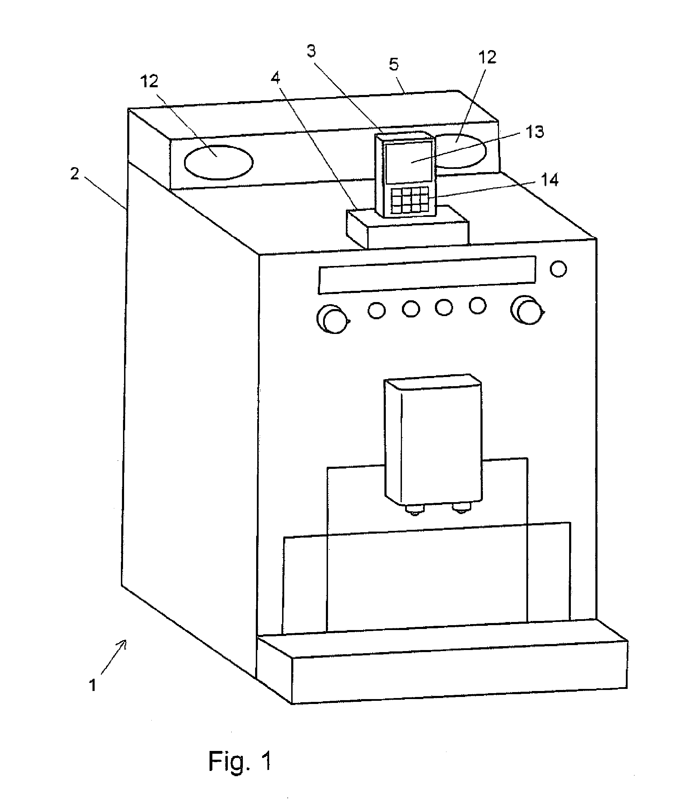

Fig. 1 zeigt eine schematische, perspektivische Ansicht eines Ausführungsbeispiels einer erfindungsgemäßen Vernetzungsanordnung 1.

Die Vernetzungsanordnung 1 umfasst eine Küchenmaschine 2, ein Multimediagerät 3, eine Ladestation 4 und eine Schnittstelleneinheit 5.

Die Küchenmaschine 2 ist in diesem Beispiel als Kaffeeautomat ausgebildet, selbstverständlich kann auch eine andere Ausführung, beispielsweise als Kaffeemaschine oder Kochgerät, möglich sein.

Das Multimediagerät 3 ist hier ein Multifunktionsmobiltelefon, z.B. ein I-Pod bzw. I-Phone, und weist eine große Anzeigeeinheit 13 sowie eine Eingabeeinheit 14 auf. Alternativ können Anzeige- und Eingabeeinheit, z.B. in Form eines Touch Screens, auch in einer technischen Funktionskomponente zusammengefasst sein. Als Halterung des Multimediagerätes 3 ist eine korrespondierende Ladestation 4 vorgesehen, welche die Haltefunktion und auch Ladefunktion für das Multimediagerät 3 bereitstellt. Die Ladestation 4 ist hier an der Vorderseite auf der Küchenmaschine 2 oberhalb ihres Bedienfeldes, das hier nicht näher erläutert wird, angeordnet.

In diesem Beispiel ist weiterhin auf der Küchenmaschine 2 an der hinteren Seite eine Schnittstelleneinheit 5 platziert. Die Schnittstelleneinheit 5 umfasst ein Gehäuse, in welchem eine elektronische Schnittstelle zur elektrischen Verbindung zwischen Multimediagerät 3 und Küchenmaschine 2 untergebracht ist. Diese Verbindung wird unten noch näher erläutert. Außerdem sind im Gehäuse der Schnittstelleneinheit 5 in diesem Beispiel zwei Lautsprecher 12 mit einem dazugehörigen Verstärker (nicht gezeigt) vorgesehen.

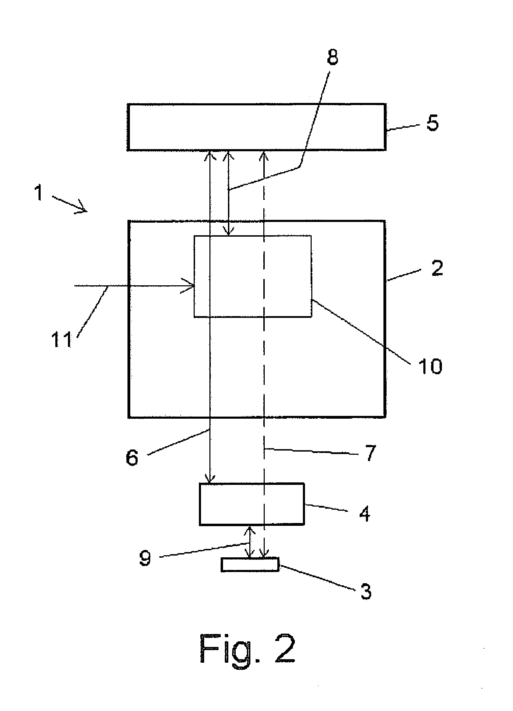

In Fig. 2 ist ein schematisches Blockschaltbild des Ausführungsbeispiels nach Fig. 1 dargestellt.

Die Küchenmaschine 2 weist ein Steuergerät 10 auf, welches über eine Energieversorgung 11 mit dem Stromnetz verbunden ist. Das Steuergerät 10 ist intern mit den Funktionseinheiten der Küchenmaschine 2 vernetzt, auf die hier nicht weiter eingegangen wird. Weiterhin ist eine Verbindung Schnittstelle/Küchenmaschine 8 zwischen dem Steuergerät 10 und der Schnittstelleneinheit 5 vorgesehen, über welche das Steuergerät 10 die Schnittstelleneinheit 5 einerseits mit elektrischer Energie aus dem Stromnetz versorgt und andererseits Daten zwischen dem Steuergerät und der Schnittstelleneinheit 5 übermittelt werden.

Die Schnittstelleneinheit 5 stellt elektrische Versorgungsenergie in angepasster Form, d.h. mit geeigneter Spannung, Frequenz und Leistung der Ladestation 4 über eine Verbindung Schnittstelleneinheit/Ladestation 6 zur Verfügung. Diese Verbindung 6 kann aber auch über weitere Adern Daten zur Ladestation 4 übertragen und von dieser zurück leiten.

Das Multimediagerät 3 ist mit der Ladestation 4 über eine Verbindung Ladestation/Multimediagerät 9 verbunden, wenn das Multimediagerät 3 in die Ladestation 4 eingesetzt ist (siehe Fig. 1). Mit der Schnittstelleneinheit 5 ist das Multimediagerät 3 mittels einer Übertragungsstrecke 7 für Daten verbunden. Diese Übertragungsstrecke 7 kann zum Beispiel eine drahtlose Übertragungsstrecke wie Infrarot, Funk, Bluetooth sein. Es ist auch möglich, dass diese Übertragungsstrecke 7 Bestandteil der Verbindung Schnittstelleneinheit/Ladestation 6 ist. Die Übertragungsstrecke 7 ist vorzugsweise eine bidirektionale Übertragungsstrecke.

Das Multimediagerät 3 kann in ihm gespeicherte Musik im vorbestimmten Format, z.B. MP3, über die Übertragungsstrecke 7 an die Schnittstelleneinheit 5 zur Ausgabe über die Lautsprecher 12 (siehe Fig. 1) übertragen. Besitzt das Multimediagerät 3 einen Radioempfänger, so können dessen empfangene Sendungen auf gleichem Wege an die Lautsprecher 12 geleitet werden.

Mittels der Eingabeeinheit 14 können Daten über die Schnittstelleneinheit 5 an das Steuergerät 10 der Küchenmaschine 2 geführt werden. Zum Beispiel ist es möglich, bestimmte Schaltfunktionen und/oder Kombinationen vorzuwählen, wie verschiedene Getränke nacheinander zu bereiten, wobei diese Kombinationen nicht in der üblichen Bedienung der Küchenmaschine 2 vorhanden sind. Es lassen sich auch vorbestimmte Rezepturen für Mischungen und besondere Zubereitungen mit der Eingabeeinheit 14 zusammenstellen. Dabei kann die Anzeigeeinheit 13 die Zutaten zur Auswahl anzeigen. Es sind sehr viele Optionen denkbar und möglich.

Aufgrund der bidirektionalen Übertragungsstrecke 7 können Daten der Küchenmaschine 2, z.B. Zubereitungsprozesse, Garzeiten usw., auf der Anzeigeeinheit 13 visualisiert und angezeigt werden.

Eine Uhr- bzw. Timerfunktion des Multimediagerätes 3 kann die Küchenmaschine 3 so bedienen, dass bestimmte Zubereitungen zu bestimmten Zeiten automatisch erfolgen.

Die Küchenmaschine 3 kann ihre Bevorratungswünsche in Abhängigkeit von vorhandenen Sensoren (Kaffee, Zucker, Milch usw.) über die Schnittstelleneinheit 5 an das Multimediagerät 3 übertragen, welches dann z.B. automatisch Bestellungen über seine Telefonfunktion bei Lieferanten vornimmt.

Das oben beschriebene Ausführungsbeispiel schränkt die Erfindung nicht ein. Sie ist im Rahmen der beigefügten Ansprüche modifizierbar.

Es ist zum Beispiel denkbar, dass mehrere, auch unterschiedliche Multimediageräte 3 anschließbar sind.

### Bezugszeichenliste

- 1: Vernetzungsanordnung
- 2: Küchenmaschine
- 3: Multimediagerät
- 4: Ladestation
- 5: Schnittstelleneinheit
- 6: Verbindung Schnittstelleneinheit/Ladestation
- 7: Übertragungsstrecke
- 8: Verbindung Schnittstelle/Küchenmaschine
- 9: Verbindung Multimediagerät/Ladestation
- 10: Steuergerät
- 11: Energieversorgung
- 12: Lautsprecher
- 13: Anzeigeeinheit
- 14: Eingabeeinheit

## Patentansprüche

1. Vernetzungsanordnung (1) wenigstens einer Küchenmaschine (2), wobei die Küchenmaschine als Kaffeevollautomat ausgebildet ist, und wenigstens eines Multimediagerätes (3), mit:
a. einer Schnittstelleneinheit (5) zur Verbindung der wenigstens einen Küchenmaschine (2) mit dem wenigstens einen Multimediagerät (3);
b. einer Ladestation (4) zur Aufnahme des wenigstens einen Multimediagerätes (3); und
c. einer Übertragungsstrecke (7) zwischen der Schnittstelleneinheit (5) und dem wenigstens einen Multimediagerät (3),
wobei die Schnittstelleneinheit (5) akustische und optische Ausgabemittel aufweist, und die akustischen Ausgabemittel Lautsprecher zur akustischen, hochqualitativen Wiedergabe von Musik aus dem Multimediagerät aufweisen.

2. Vernetzungsanordnung (1) nach Anspruch 1, **dadurch gekennzeichnet, dass** die Übertragungsstrecke (7) drahtlos ausgebildet ist.

3. Vernetzungsanordnung (1) nach Anspruch 2, **dadurch gekennzeichnet, dass** die drahtlose Übertragungsstrecke (7) eine Bluetooth-, Funk- oder optische Übertragungsstrecke ist.

4. Vernetzungsanordnung (1) nach Anspruch 1, **dadurch gekennzeichnet, dass** die Übertragungsstrecke (7) Bestandteil einer Verbindung (6) zwischen Schnittstelleneinheit (5) und Ladestation (4) ist.

5. Vernetzungsanordnung (1) nach einem der vorhergehenden Ansprüche, **dadurch gekennzeichnet, dass** die Übertragungsstrecke (7) bidirektional ausgebildet ist.

6. Vernetzungsanordnung (1) nach einem der vorhergehenden Ansprüche, **dadurch gekennzeichnet, dass** eine Anzeigeeinheit (13) und/oder eine Eingabeeinheit (14) des Multimediagerätes (3) mit der Küchenmaschine (2) in Funktionsverbindung steht.
